**Europäisches Patentamt**

**European Patent Office**

**Office européen des brevets**

(11) Veröffentlichungsnummer: **0 151 202**

**A1**

(12) ## EUROPÄISCHE PATENTANMELDUNG

(21) Anmeldenummer: **84101287.5**

(22) Anmeldetag: **08.02.84**

(51) Int. Cl.⁴: **A 23 F 5/20**
**A 23 F 3/36, A 23 F 5/48**
**A 23 F 3/42**

(43) Veröffentlichungstag der Anmeldung:
**14.08.85 Patentblatt 85/33**

(84) Benannte Vertragsstaaten:
**CH FR GB LI NL**

(71) Anmelder: **HAG GF AKTIENGESELLSCHAFT**
**Hagstrasse**
**D-2800 Bremen 1(DE)**

(72) Erfinder: **Gehrig, Manfred, Dr.**
**Lug-ins-Land 10**
**D-8069 Wolnzach(DE)**

(74) Vertreter: **Abitz, Walter, Dr.-Ing. et al,**
**Abitz, Morf, Gritschneder, Freiherr von Wittgenstein**
**Postfach 86 01 09**
**D-8000 München 86(DE)**

(54) **Verfahren zur Herstellung von coffeinfreiem löslichem Kaffee- oder Tee-Extrakt-Pulver.**

(57) Die Erfindung betrifft ein Verfahren zur Herstellung von coffeinfreiem, löslichem Kaffee- oder Tee-Extrakt-Pulver, bei dem man Röstkaffee oder Blättertee mit trockenem, überkritischem Gas die Aromabestandteile entzieht, dem so behandelten Röstkaffee oder Blättertee nach Anfeuchtung mit feuchtem, überkritischem Gas das Coffein entzieht, dem entcoffeinierten Röstkaffee oder Blättertee mit Wasser die wasserlöslichen Bestandteile entzieht, und den wässrigen Extrakt dann mit den oben erhaltenen Aromabestandteilen wieder vereinigt. Das Verfahren zeichnet sich dadurch aus, dass man die Wiedervereinigung der Aromabestandteile mit dem wässrigen Extrakt vor dessen Gefriertrocknung vornimmt, und zwar derart, dass man den aufkonzentrierten wässrigen Extrakt dem an Anfang des Verfahrens anfallenden, die Aromabestandteile enthaltenden überkritischen Gas vor dessen Entspannung zusetzt, anschliessend durch Entspannung entmischt und dann die mit den Aromabestandteilen angereicherte Lösung, gegebenenfalls nach Zusatz von weiterem wässrigen Extrakt gefriertrocknet. Die nach diesem Verfahren erhaltenen Kaffee- oder Tee-Extrakt-Pulver sind solchen Produkten geschmacklich überlegen, bei denen die Vermischung der Aromabestandteile mit dem bereits getrockneten wässrigen Extrakt erfolgt ist.

EP 0 151 202 A1

## Verfahren zur Herstellung von coffeinfreiem, löslichem Kaffee- oder Tee-Extrakt-Pulver

B e s c h r e i b u n g

Die Erfindung betrifft ein Verfahren zur Herstellung von coffeinfreiem, löslichem Kaffee- oder Tee-Extrakt-Pulver, in dem man Röstkaffee oder Blättertee mit trockenem, überkritischem Gas die Aromabestandteile entzieht, dem so behandelten Röstkaffee oder Blättertee nach Anfeuchtung mit feuchtem, überkritischem Gas das Coffein entzieht, dem entcoffeinierten Röstkaffee oder Blättertee mit Wasser die wasserlöslichen Bestandteile entzieht, und den wässrigen Extrakt mit den Aromabestandteilen wiedervereinigt.

Bei der Weiterverarbeitung von an sich gebrauchsfertigen Gütern, wie geröstetem und gemahlenem Kaffee oder schwarzem Tee zum Zwecke der Entcoffeinierung oder Extraktgewinnung tritt gewöhnlich eine Verminderung des Aromagehaltes ein. Deshalb werden zum Abschluss der Behandlung in geeigneter Weise arteigene Aromastoffe hinzugefügt.

Die zur Aromatisierung benötigten Aromafraktionen können in konventioneller Weise durch Austreiben mit Wasserdampf oder inerten Gasen, durch Auspressen oder durch Extrahieren mit organischen Lösungsmitteln gewonnen werden.

Allen diesen Verfahren haften Nachteile an. So können die Aromakomponenten durch chemische oder thermische Einflüsse geschädigt werden und Lösungsmittel können unerwünschte Rückstände hinterlassen. Vorteilhaft können Aromastoffe jedoch durch Extraktion mit Kohlendioxid erhalten werden.

So wird in der CH-PS 2184/66 beschrieben, die Aromakomponenten mit gasförmigem Kohlendioxid auszutreiben, oder auch mit flüssigem Kohlendioxid zu extrahieren.

- 2 -

In der DE-PS 21 06 133 wird ein Verfahren zum Extrahieren von Aromabestandteile enthaltendem Kaffeeöl aus Röstkaffee mit Kohlendioxid als Extraktionsmittel beschrieben, bei dem man dem gerösteten Kaffee das Öl mit den Aromastoffen durch Extrahieren mit überkritischem Kohlendioxid in der Fluidphase im Kreislauf bei einer Temperatur von 40 bis 170°C und bei einem Druck von 73 bis 2000 bar, vorzugsweise 150 bis 350 bar entzieht.

In der DE-PS 21 27 642 wird beschrieben, wie ein entcoffeinierter schwarzer Tee bzw. ein Tee-Extrakt mit vollem Aromagehalt durch Behandeln mit Kohlendioxid gewonnen werden kann. Hierbei werden im ersten Schritt mit trockenem, überkritischem Kohlendioxid die Aromastoffe entzogen; im zweiten Schritt wird mit feuchtem, überkritischem Kohlendioxid das Coffein entfernt und nach Rücktrocknung wird in einem dritten Schritt das in der ersten Extraktion entzogene Aroma wieder aufimprägniert. Gegebenenfalls kann sich nach der Entcoffeinierung eine wässrige Extraktion zur Herstellung von Instant-Tee anschliessen.

Mit ähnlichen Schritten wird in der DE-PS 21 19 678 die Behandlung von Röstkaffee zur Gewinnung von Kaffee-Extrakt beschrieben:

Dazu wird

1. geschrotetem Röstkaffee durch Extraktion mit trockenem, überkritischem Fluid wie z.B. Kohlendioxid im Kreislauf das die Aromabestandteile enthaltene Kaffee-Öl entzogen,

2. dem mit Wasser auf einen Feuchtigkeitsgehalt von etwa 20 bis 55 % befeuchteten Extraktionsgut mit feuchtem, überkritischem $CO_2$ das Coffein entzogen,

3. dem Extraktionsgut mit Wasser die wasserlöslichen
   Bestandteile entzogen und

4. das aus dem so gewonnenen Dicksaft durch Sprüh- oder
   Gefriertrocknung erhaltene Pulver mit dem in der
   ersten Stufe gewonnenen Kaffeeöl aromatisiert.

Die gewünschten Aromakomponenten, welche nach der Extraktion
aus Kaffee oder Tee im Lösungsmittel Kohlendioxid gelöst
sind, können durch Änderung der Lösungsfähigkeit des Kohlendioxids von demselben abgetrennt werden. Eine Veränderung
der Lösungsfähigkeit wird durch Verringerung der Dichte erreicht. Dazu kann z.B. bei konstanter Temperatur der Druck
erniedrigt werden, es können aber auch Temperatur und Druck
so verändert werden, daß im Abschaltebehälter Flüssigkeit
und Gas nebeneinander existieren. Das gasförmige Kohlendioxid besitzt wegen seiner niedrigen Dichte kaum Lösungsfähigkeiten und übt dadurch eine Sperrwirkung auf die gelösten Komponenten aus. Es kann abgesaugt, verdichtet und
wieder verwendet werden.

Der anfallende Extrakt der Aromakomponenten wird dann entnommen und dem zu aromatisierenden festen Gut zugemischt.

Es hat sich nun aber gezeigt, dass eine Imprägnierung des
durch Sprüh- oder Gefriertrocknung erhaltenen Pulvers aus
der oben genannten Stufe 4 mit den Aromakomponenten geschmacklich nicht zufriedenstellend ist. Aus diesem Grunde
wurde im Rahmen von Versuchen, die zur vorliegenden Erfindung geführt haben, versucht, die Zumischung der Aromakomponenten bereits in der Stufe vorzunehmen, in der der wässrige
Extrakt mit den wasserlöslichen Bestandteilen anfällt (siehe
Stufe 3 oben). Dabei könnten die extrahierten Aromakomponenten
aus Stufe 1) einfach in der wässrigen Lösung aus Stufe 3) emulgiert werden. Ein auf diese Weise gewonnener Instant-Kaffee

- 4 -

ist jedoch in geschmacklicher Hinsicht ebenfalls noch nicht zufriedenstellend.

Es wurde nun überraschenderweise gefunden, dass ein in geschmacklicher Hinsicht zufriedenstellender Instant-Kaffee oder Instant-Tee dadurch gewonnen werden kann, dass man die Aromakomponenten innerhalb des Hochdrucksystems mit dem die wasserlöslichen Bestandteile des Kaffees oder Tees enthaltenden Extrakt vereinigt.

Die Erfindung betrifft somit ein Verfahren der eingangs geschilderten Art, bei dem man die Wiedervereinigung der Aromabestandteile mit dem wässrigen Extrakt aus Stufe 3) vor dessen Gefriertrocknung vornimmt, und zwar derart, dass man den aufkonzentrierten wässrigen Extrakt aus Stufe 3) dem in Stufe 1) anfallenden, die Aromabestandteile enthaltenden überkritischen Gas vor dessen Entspannung zusetzt, anschliessend durch Entspannung entmischt und dann die mit den Aromabestandteilen angereicherte Lösung, gegebenenfalls nach Zusatz von weiterem wässrigen Extrakt aus Stufe 3), gefriertrocknet. Als überkritisches Gas wird vorzugsweise $CO_2$ verwendet.

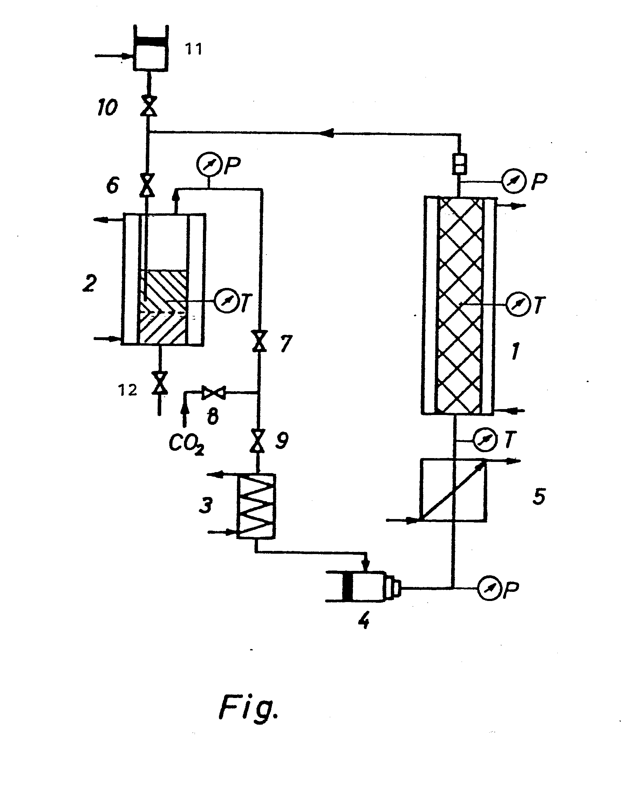

Das erfindungsgemässe Verfahren soll nun anhand einer Zeichnung näher erläutert werden. Die Figur zeigt eine Vorrichtung, mit der das Verfahren gemäss kennzeichnendem Teil des Patentanspruchs 1 durchgeführt werden kann. Die im Oberbegriff des Patentanspruchs 1 aufgezählten Merkmale beziehen sich auf ein bekanntes Verfahren und es erscheint überflüssig, eine Gesamtapparatur zu beschreiben, mit der auch die bekannten Schritte durchgeführt werden können. In der Figur fehlen daher diejenigen Teile einer Gesamtvorrichtung, mit denen man die Stufen 2) und 3) des beanspruchten Verfahrens gemäss Oberbegriff des Patentanspruchs 1 durchführt, d.h. die Entfernung des Coffeins aus Röstkaffee oder Blättertee

mit feuchtem, überkritischem Gas, und die Herstellung des wasserlöslichen Extraktes durch Behandlung des entcoffeinierten Röstkaffees oder Blättertees mit Wasser.

In der Figur wird der Behälter 1 mit gemahlenem Röstkaffee oder schwarem Blättertee beschickt, Behälter 2 zur Hälfte mit flüssigem Kohlendioxid gefüllt und dann Kohlendioxid über die Ventile 8 und 9 und den Kühler 3 durch die Pumpe 4 angesaugt, verdichtet und über den Wärmetauscher 5 in Behälter 1 gedrückt. Nach Erreichen des gewünschten Druckes in 1 wird Ventil 8 geschlossen und durch Öffnen von Ventil 7 der Kreislauf geöffnet. Der Extraktionsdruck in Behälter 1 wird durch das Überström- (= Abscheide-) Ventil 6 aufrechterhalten.

In 1 erfolgt nun die Extraktion der flüchtigen Aromabestandteile, welche im Gasstrom weggeführt werden.

Mit einer Hochdruckflüssigkeitspumpe wird nun die zu aromatisierende konzentrierte, wässrige Lösung aus dem Behälter 11 durch das geöffnete Ventil 10 zu der Mischung aus Kohlendioxid und gelösten Aroma-Komponenten zugepumpt. Durch die gemeinsame Entspannung in Ventil 6 erfolgt eine intensive Durchmischung der wässrigen Lösung und der im Kohlendioxid gelösten Aromastoffe, welche wegen der Druckerniedrigung nach dem Ventil 6 im Behälter 2 aus der Kohlendioxid-Lösung abgeschieden werden und in die wässrige Lösung übergehen können.

Werden im Behälter 2 unterkritische Temperaturen mit den zugehörigen Sättigungsdrücken eingestellt, liegen (von unten nach oben) eine Phase bestehend aus der wässrigen Lösung, eine flüssige Phase bestehend aus Kohlendioxid und eine gasförmige Phase vor. (Bei überkritischen Temperaturen

- 6 -

lägen lediglich eine wässrige und eine fluide Phase vor).

Aus der Dampfphase des Behälters 2 wird das Kohlendioxid angesaugt, im Kühler 3 gekühlt, in der Pumpe 4 komprimiert und gefördert usw. (Bei Verwendung eines Kompressors müsste das Kohlendioxid in 3 erwärmt werden.) Die konzentrierte, wässrige jetzt aromatisierte Lösung kann über ein Bodenventil 12 aus Behälter 2 kontinuierlich abgenommen und der Trocknung zugeführt werden.

Vergleichende Geschmackstests erwiesen die Überlegenheit der nach dem erfindungsgemässen Verfahren hergestellten Proben.

## B e i s p i e l    1

7 kg gerösteter und gemahlener Kaffee werden bei 100 bar und 40°C mit Kohlendioxid extrahiert. Vor dem Entspannungsventil werden innerhalb von 3 Stunden 9 kg einer wässrigen Kaffee-Lösung zugepumpt. Diese Lösung wurde durch Perkolation eines bereits entaromatisierten Kaffees in einer üblichen Anlage hergestellt, und auf eine Konzentration von 50 Gew.-% aufkonzentriert. Die aromatisierte wässrige Lösung wird kontinuierlich aus dem Abscheidebehälter, welcher sich unter Sättigungsbedingungen (25°C, 64 bar) befindet, abgezogen und gefriergetrocknet. Das Kohlendioxid wird rekomprimiert und dem Extraktbehälter wieder zugeleitet.

## B e i s p i e l    2

2 kg schwarzer Tee werden bei 300 bar und 60°C mit Kohlendioxid extrahiert. Vor dem Entspannungsventil werden inner-

- 7 -

halb von 1,5 Stunden 2 kg einer wässrigen Lösung zugepumpt. Diese auf 40 Gew.-% Feststoffe aufkonzentrierte Lösung war zuvor durch eine übliche Perkolation eines entaromatisierten schwarzen Tees hergestellt worden. Die aromatisierte wässrige Lösung wird kontinuierlich aus dem Abscheidebehälter, welcher sich unter Sättigungsbedingungen (25°C, 64 bar) befindet, abgezogen und gefriergetrocknet. Das Kohlendioxid wird rekomprimiert und dem Extraktbehälter wieder zugeleitet.

Ende der Beschreibung

8

Patentansprüche

1. Verfahren zur Herstellung von coffeinfreiem, löslichem Kaffee- oder Tee-Extrakt-Pulver, in dem man

1) Röstkaffee oder Blättertee mit trockenem, überkritischem Gas die Aromabestandteile entzieht,

2) dem so behandelten Röstkaffee oder Blättertee nach Anfeuchtung mit feuchtem, überkritischem Gas das Coffein entzieht,

3) dem entcoffeinierten Röstkaffee oder Blättertee mit Wasser die wasserlöslichen Bestandteile entzieht, und

4) den wässrigen Extrakt aus Stufe 3) mit den Aromabestandteilen aus Stufe 1) wiedervereinigt,

dadurch gekennzeichnet, dass man die Wiedervereinigung der Aromabestandteile mit dem wässrigen Extrakt aus Stufe 3) vor dessen Gefriertrocknung vornimmt, und zwar derart, dass man den aufkonzentrierten wässrigen Extrakt aus Stufe 3) dem in Stufe 1) anfallenden, die Aromabestandteile enthaltenden überkritischen Gas vor dessen Entspannung zusetzt, anschliessend durch Entspannung entmischt und dann die mit den Aromabestandteilen angereicherte Lösung, gegebenenfalls nach Zusatz von weiterem wässrigen Extrakt aus Stufe 3), gefriertrocknet.

2. Verfahren nach Anspruch 1, dadurch gekennzeichnet, dass als überkritisches Gas $CO_2$ verwendet wird.

Fig.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | FR-A-2 140 098 (HAG) * Ansprüche 1,2,6,7; Seite 6, Zeile 30 - Seite 7, Zeile 40 * --- | 1,2 | A 23 F 5/20 A 23 F 3/36 A 23 F 5/48 A 23 F 3/42 |
| D,A | FR-A-2 133 957 (HAG) * Anspruch 1 * --- | 1,2 | |
| D,A | FR-A-1 512 642 (SOC. DES PRODUITS NESTLE) * Zusammenfassung Punkte I1,2,4,15,16 * --- | 1,2 | |
| A | CH-A- 525 621 (SOC. DES PRODUITS NESTLE) * Anspruch 1 * --- | 1,2 | |
| E | DE-A-3 241 611 (HAG) * Ansprüche 1,2 * | 1,2 | RECHERCHIERTE SACHGEBIETE (Int. Cl. ³) |
| | ----- | | A 23 F |

Der vorliegende Recherchenbericht wurde für alle Patentansprüche erstellt.

| Recherchenort DEN HAAG | Abschlußdatum der Recherche 02-10-1984 | Prüfer DESMEDT G.R.A. |
|---|---|---|